# EUROPEAN PATENT SPECIFICATION

(11) **EP 4 395 043 B1**
(45) Date of publication and mention of the grant of the patent: **25.03.2026**
(21) Application number: 23217790.7
(22) Date of filing: 18.12.2023
(51) Int. Cl.: H01M 50/503, H01M 50/507

(54) **BUSBAR ASSEMBLY, BATTERY MODULE, AND BATTERY PACK**
SAMMELSCHIENENANORDNUNG, BATTERIEMODUL UND BATTERIEPACK
ENSEMBLE BARRE OMNIBUS, MODULE DE BATTERIE ET BLOC-BATTERIE

(30) Priority: 30.12.2022 CN 202223583815 U
(43) Date of publication of application: 03.07.2024
(73) Proprietor: Huawei Digital Power Technologies Co., Ltd., Shenzhen, Guangdong 518043 (CN)
(72) Inventor: LIANG, Junwei, Shenzhen 518043 (CN); WANG, Jinpeng, Shenzhen 518043 (CN)
(74) Representative: Gill Jennings & Every LLP

(56) References cited:
- WO-A1-2024/092965
- WO-A1-2024/093009
- US-B2- 10 971 784

## Description

### TECHNICAL FIELD

This application relates to the field of battery technologies, and in particular, to a busbar assembly, a battery module, and a battery pack.

### BACKGROUND

As a core component of a new energy storage system, a square hard-shell lithium-ion battery is more used. A battery module generally includes a plurality of cells and a busbar assembly. When the busbar assembly is welded to terminals of the plurality of cells, the terminals of the cells and the busbar assembly are prone to be poorly welded; consequently, a product quality problem is caused. WO2024092965A1 discloses an isolation plate assembly for battery modules, improving output pole stability. WO2024093009A1 discloses a collection component for battery modules that simplifies voltage and temperature monitoring.

### SUMMARY

This application provides a busbar assembly, a battery module, and a battery pack. Hole bodies respectively corresponding to glue dispensing protrusions that are at liquid injection holes of a plurality of cells are provided on a support of the busbar assembly. In this way, when busbars are welded to terminals of the cells, poor welding between the busbars and the terminals of the cells caused because the glue dispensing protrusions lift the support can be avoided, thereby improving product quality and use safety performance.

According to a first aspect, this application provides a busbar assembly. The busbar assembly includes: a support, where a plurality of hollow-out structures are disposed on the support, and each hollow-out structure is configured to correspond to a terminal of at least one cell of a battery module; and a plurality of busbars, respectively mounted at the plurality of hollow-out structures, where each busbar is configured to connect to the terminal of the at least one cell; and a plurality of hole bodies are further provided on the support, and at least a part of the plurality of hole bodies are configured to respectively correspond to glue dispensing protrusions that are at liquid injection holes of a plurality of cells of the battery module. Two hole bodies corresponding to each cell are provided on the support, wherein a first end of the cell faces one side of the support, a second end of the cell faces the other side of the support, and one of the two hole bodies corresponds to the glue dispensing protrusion; or the first end of the cell faces the other side of the support, the second end of the cell faces the side of the support, and the other one of the two hole bodies corresponds to the glue dispensing protrusion.

When sealing performed through steel ball hitting and glue dispensing is performed on a liquid injection hole of a square hard-shell cell, glue solidifies, a hard protrusion is formed, and a protrusion height cannot be controlled. In addition, it is inconvenient to check all cells. Because glue dispensing hard protrusions are distributed on the top of the cells, when the busbar assembly covers the cells, and the busbars are welded to terminals of the cells, the hard protrusions are prone to lift the plastic support of the busbar assembly, resulting in poor welding between the terminals of the cells and the busbar assembly and causing a serious product quality problem. For the problem of poor welding of the busbars caused because the plastic support is lifted by the glue dispensing protrusions, a module design of the busbar assembly in embodiments of this application is optimized, and the hole bodies are reserved on the plastic support. Because the hole bodies respectively corresponding to the glue dispensing protrusions that are at the liquid injection holes of the plurality of cells are provided on the support of the busbar assembly, when the busbars are welded to the terminals of the cells, poor welding between the busbars and the terminals of the cells caused because the glue dispensing protrusions lift the support can be avoided. This ensures quality and safety of a battery film group formed by performing, on the cells, sealing performed through steel ball hitting and glue dispensing.

In a possible implementation, the hole body is a circle or polygon; and two hole bodies corresponding to each cell are provided on the support, where a first end of the cell faces one side of the support, a second end of the cell faces the other side of the support, and one of the two hole bodies corresponds to the glue dispensing protrusion; or the first end of the cell faces the other side of the support, the second end of the cell faces the side of the support, and the other one of the two hole bodies corresponds to the glue dispensing protrusion. In this way, a shape of the hole body may be selected based on a requirement. In addition, the two hole bodies corresponding to each cell are provided on the support. No matter whether the first end of the cell corresponds to a first side of the support or the second end of the cell corresponds to the first side of the support, it can be ensured that the glue dispensing protrusion of the cell corresponds to the hole body.

In a possible implementation, the hollow-out structure includes an opening and a support platform, the busbar is supported and placed at the opening on the support platform, and the support platform includes: at least one boss, disposed in a circumferential direction of the opening; and/or a support rod, where two ends of the support rod are respectively connected to two opposite sides of the opening. In this way, a weight of the support can be reduced, and it is convenient for the busbar to be connected to the terminal of the cell when the busbar is mounted in the hollow-out structure.

In a possible implementation, the support includes a plurality of first recess portions, the hollow-out structure is disposed at the first recess portion, at least one first limiting clip is disposed at the first recess portion, a gap is provided between the first limiting clip and the support platform in a direction perpendicular to a plane on which the support is located, the busbar is disposed at the gap, and the first limiting clip is configured to clamp and fasten the busbar. In this way, the hollow-out structure is disposed in a recess manner, so that the busbar is reliably connected to the terminal of the cell, and the first limiting clip may fasten a position of the busbar, so that the busbar is mounted more reliably and stably.

In a possible implementation, the plurality of busbars include: a plurality of first busbars, where each first busbar is configured to connect terminals, of different polarities, of two cells that are adjacent in a first direction, so that the two cells that are adjacent in the first direction are connected in series; and two second busbars, where one of the two second busbars is configured to connect positive terminals of the plurality of cells connected in series, and the other is configured to connect negative terminals of the plurality of cells connected in series. In this way, the plurality of cells may be arranged along the first direction, and adjacent cells are connected in series through the first busbar.

In a possible implementation, the plurality of busbars further include: a third busbar, configured to connect terminals, of different polarities, of two cells that are adjacent in a second direction, so that the two cells that are adjacent in the second direction are connected in series, where the first direction is perpendicular to the second direction. In this way, a plurality of columns of cells may be disposed along the second direction. Each column of cells may include a plurality of cells arranged along the first direction, each column of cells may be connected in series through the first busbars, and then adjacent columns of cells are connected in series through the third busbar.

In a possible implementation, at least one via is provided on the busbar, and the busbar is welded to a positive terminal or a negative terminal of the cell at the at least one via. The via is provided, so that the busbar is welded to the terminal of the cell at the via.

In a possible implementation, the support further includes: a plurality of second recess portions, where the plurality of hole bodies are provided at the plurality of second recess portions, and at least one hole body is provided at each second recess portion; and/or a plurality of third recess portions, where each third recess portion is configured to mount a cable, a second limiting clip is disposed on at least a part of the third recess portion, and the second limiting clip is used to clamp and fasten the cable. In this way, the hole body is provided at the second recess portion, which can better ensure that the hole body corresponds to the glue dispensing protrusion, and can further reduce the weight of the support. In addition, the third recess portion may be disposed on the support to mount the cable, and the second limiting clip may be disposed at the third recess portion to clamp and fasten the cable.

According to a second aspect, this application provides a battery module. The battery module includes a plurality of cells disposed in parallel, where each cell includes a shell, a steel ball, and a glue dispensing protrusion, a positive terminal, a negative terminal, and a liquid injection hole are provided on the shell, the steel ball is disposed at the liquid injection hole, and the glue dispensing protrusion seals a gap between the steel ball and the liquid injection hole; and the busbar assembly provided in the first aspect, covering the plurality of cells disposed in parallel, where each of a plurality of busbars of the busbar assembly is connected to at least one of the corresponding positive terminal and/or negative terminal.

According to a third aspect, this application provides a battery pack. The battery pack includes at least one battery module provided in the second aspect.

Other features and advantages of this application are described in detail in the following specific embodiments.

### BRIEF DESCRIPTION OF DRAWINGS

The following briefly describes the accompanying drawings that need to be used in the descriptions of embodiments or a conventional technology.
FIG. 1 is a schematic diagram of a structure of a busbar assembly according to an embodiment of this application;
FIG. 2 is an example of a schematic diagram of a structure of a support of the busbar assembly shown in FIG. 1; and
FIG. 3 is an example of a schematic diagram of a partial structure of a battery module according to an embodiment of this application.

### DESCRIPTION OF EMBODIMENTS

The following describes technical solutions in embodiments of this application with reference to accompanying drawings in embodiments of this application.

In descriptions of this application, locations or location relationships indicated by terms "center", "up", "down", "front", "behind", "left", "right", "vertical", "horizontal", "top", "bottom", "inside", "outside", and the like are based on locations or location relationships shown in the accompanying drawings, and are merely intended for ease of describing this application and simplifying descriptions, instead of indicating or implying that a mentioned apparatus or component needs to be provided on a specific location or constructed and operated on a specific location, and therefore shall not be understood as limitations on this application.

In the descriptions of this application, it should be noted that, unless otherwise clearly specified and limited, terms "mount", "link", and "connect" should be understood in a broad sense, for example, may mean a fastened connection, may be a detachable connection, or may be a butt joint connection or an integrated connection. Persons of ordinary skill in the art can understand specific meanings of the foregoing terms in this application based on specific cases.

In the descriptions of this specification, specific features, structures, materials, or characteristics may be combined in a proper manner in any one or more of embodiments.

When a battery module is produced, liquid injection holes of cells need to be sealed first, and then a busbar assembly covers a plurality of cells, to facilitate welding between the busbar assembly and terminals of the cells. A sealing manner of a liquid injection hole of a square hard-shell lithium-ion battery is to use an automatic device to hit a spherical stainless steel ball into the liquid injection hole on the top of a cell, thereby achieving an effect of sealing the liquid injection hole. Considering that liquid leakage occurs on the top of the cell when the liquid injection hole is sealed by manually hitting the steel ball, a glue dispensing sealing technique may be added to an automatic steel ball hitting technique, to enhance safety and reliability of the cell. However, when the glue dispensing sealing technique is used, a hard protrusion is formed after glue solidifies. When the busbar assembly is welded to terminals of the plurality of cells, there is a risk that the busbar assembly is lifted by glue dispensing hard protrusions, and poor welding of busbars is prone to be caused; consequently, product quality is seriously affected.

In view of this, embodiments of this application provide a busbar assembly, a battery module, and a battery pack. Hole bodies respectively corresponding to glue dispensing protrusions that are at liquid injection holes of a plurality of cells are provided on a support of the busbar assembly. In this way, when busbars are welded to terminals of the cells, poor welding between the busbars and the terminals of the cells caused because the glue dispensing protrusions lift the support can be avoided, thereby improving product quality and use safety performance. The battery pack may be used in a base station power backup scenario.

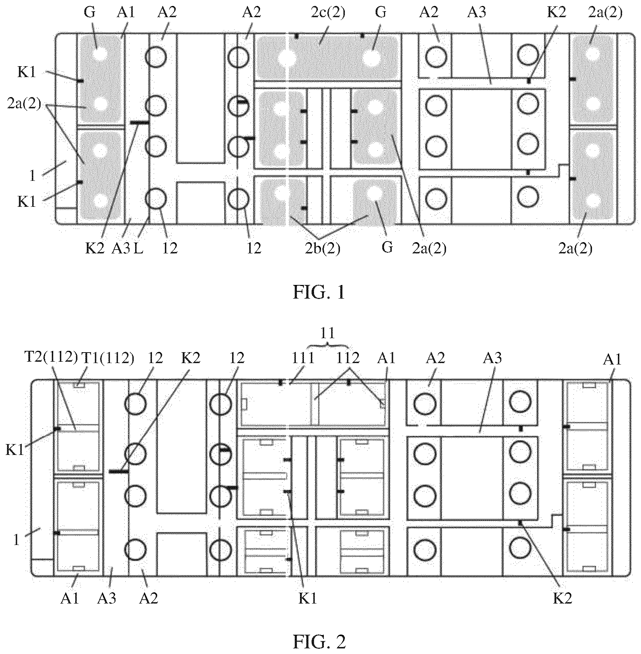

FIG. 1 is a schematic diagram of a structure of a busbar assembly according to an embodiment of this application. FIG. 2 is an example of a schematic diagram of a structure of a support of the busbar assembly shown in FIG. 1. As shown in FIG. 1 and FIG. 2, the busbar assembly includes a support 1 and a plurality of busbars 2. A plurality of hollow-out structures 11 are disposed on the support 1, and each hollow-out structure 11 is configured to correspond to a terminal of at least one cell of a battery module. The plurality of busbars 2 are respectively mounted at the plurality of hollow-out structures 11, and each busbar is configured to connect to the terminal of the at least one cell. In addition, a plurality of hole bodies 12 are further provided on the support 1, and at least a part of the plurality of hole bodies 12 are configured to respectively correspond to glue dispensing protrusions that are at liquid injection holes of a plurality of cells of the battery module. The support may be made of a plastic material.

In the busbar assembly in embodiments of this application, for a problem of poor welding of the busbars caused because the plastic support is lifted by the glue dispensing protrusions, a module design is optimized, and the hole bodies are reserved on the plastic support. Because the hole bodies respectively corresponding to the glue dispensing protrusions that are at the liquid injection holes of the plurality of cells are provided on the support of the busbar assembly, when the busbars are welded to terminals of the cells, poor welding between the busbars and the terminals of the cells caused because the glue dispensing protrusions lift the support can be avoided. This ensures quality and safety of a battery film group formed by performing, on the cells, sealing performed through steel ball hitting and glue dispensing.

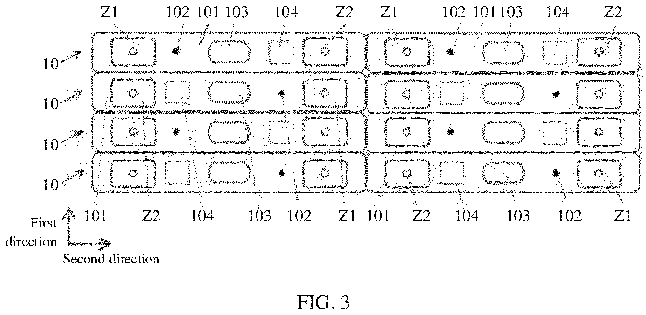

Still refer to FIG. 1 and FIG. 2. The hole body 12 may be a circle. In another example, the hole body 12 may be a polygon. In addition, two hole bodies 12 corresponding to each cell are provided on the support 1. A first end of the cell faces one side of the support 1, a second end of the cell faces the other side of the support 1, and one of the two hole bodies 12 corresponds to the glue dispensing protrusion; or the first end of the cell faces the other side of the support 1, the second end of the cell faces the side of the support 1, and the other one of the two hole bodies 12 corresponds to the glue dispensing protrusion. That is, in order to connect adjacent cells in series, a positive terminal of one of two adjacent cells may be disposed in parallel with a negative terminal of the other one of the two adjacent cells (as shown in FIG. 3 below, a positive terminal Z1 and a negative terminal Z2 of adjacent cells 10 are disposed in parallel). In this case, positions of glue dispensing protrusions (for example, glue dispensing protrusions 102 in FIG. 3) at liquid injection holes of the two adjacent cells are different. To ensure that glue dispensing protrusions all correspond to hole bodies 12 and facilitate processing and manufacturing, the two hole bodies 12 corresponding to each cell are provided on the support 1.

As shown in FIG. 2, the hollow-out structure 11 may include an opening 111 and a support platform 112, the busbar is supported and placed at the opening 111 on the support platform 112, and the support platform 112 may include at least one boss T1 and/or a support rod T2. The at least one boss T1 is disposed in a circumferential direction of the opening 111. Two ends of the support rod T2 are respectively connected to two opposite sides of the opening 111. In FIG. 2, the opening 111 is a rectangle, bosses T1 are respectively disposed on two opposite sides of the rectangle, and the two ends of the support rod T2 are respectively connected to the other two opposite sides of the rectangle. In another example, the opening 111 may alternatively be in another shape.

In addition, the support 1 may include a plurality of first recess portions A1, the hollow-out structure 11 is disposed at the first recess portion A1, at least one first limiting clip K1 is disposed at the first recess portion A1, a gap is provided between the first limiting clip K1 and the support platform 112 in a direction perpendicular to a plane on which the support 1 is located, the busbar 2 is disposed at the gap, and the first limiting clip K1 is configured to clamp and fasten the busbar 2. That is, the hollow-out structure 11 is disposed in a recess manner, which facilitates welding between the busbar 2 and the terminal of the cell, and facilitates arrangement of the first limiting clip K1 to fasten and clamp the busbar 2.

In some examples, the first limiting clip K1 may be made of an elastic material, the support 1 may be made of an elastic material, and the support 1 and the first limiting clip K1 may be integrated or split.

In addition, to facilitate welding between the busbar 2 and the terminal of the cell, at least one via G may be provided on the busbar 2, and the busbar 2 is welded to a positive terminal or a negative terminal of the cell at the at least one via G.

As shown in FIG. 1, the plurality of busbars 2 may include a plurality of first busbars 2a and two second busbars 2b. Each first busbar 2a is configured to connect terminals, of different polarities, of two cells that are adjacent in a first direction, so that the two cells that are adjacent in the first direction are connected in series. One of the two second busbars 2b is configured to connect positive terminals of the plurality of cells connected in series, and the other is configured to connect negative terminals of the plurality of cells connected in series.

For example, two vias G may be provided on the first busbar 2a, one of the two vias G is configured to be welded to a positive terminal of one of the two cells that are adjacent in the first direction, and the other one of the two vias G is configured to be welded to a negative terminal of the other one of the two cells that are adjacent in the first direction. In this way, the two cells that are adjacent in the first direction may be connected in series through the first busbar 2a. One via G may be provided on the second busbar 2b, one of the two second busbars 2b is welded, at the via G, to the positive terminals of the plurality of cells connected in series, and the other one of the two second busbars 2b is welded, at the via G, to the negative terminals of the plurality of cells connected in series.

In some examples, as shown in FIG. 1, the plurality of busbars 2 may further include a third busbar 2c. The third busbar 2c is configured to connect terminals, of different polarities, of two cells that are adjacent in a second direction, so that the two cells that are adjacent in the second direction are connected in series, where the first direction is perpendicular to the second direction. For example, two vias G may be provided on the third busbar 2c, one of the two vias G is configured to be welded to a positive terminal of one of the two cells that are adjacent in the second direction, and the other one of the two vias G is configured to be welded to a negative terminal of the other one of the two cells that are adjacent in the second direction. In this way, the two cells that are adjacent in the second direction may be connected in series through the third busbar 2c.

In addition, in some examples, the support 1 may further include a plurality of second recess portions A2. The plurality of hole bodies 12 are respectively provided on the plurality of second recess portions A2, and at least one hole body 12 is provided at each second recess portion A2. Because the hole body 12 is provided at the second recess portion A2, and structural strength is relatively low, the support 1 further includes a reinforcing rib L, and the reinforcing rib L is disposed at the second recess portion A2, so as to improve the structural strength.

In some other examples, the support 1 may further include a plurality of third recess portions A3. Each third recess portion A3 is configured to mount a cable, a second limiting clip K2 is disposed on at least a part of the third recess portion A3, and the second limiting clip K2 is used to clamp and fasten the cable. In addition, the second limiting clip K2 may be made of an elastic material, the support 1 may be made of an elastic material, and the support 1 and the second limiting clip K2 may be integrated or split.

FIG. 3 is an example of a schematic diagram of a partial structure of a battery module according to an embodiment of this application. The battery module includes a plurality of cells 10 disposed in parallel and the foregoing busbar assembly. In FIG. 3, the busbar assembly of the battery module is removed, that is, only the plurality of cells 10 are shown. As shown in FIG. 3, two columns of cells are disposed along a second direction, and each column of cells includes four cells 10 disposed along a first direction. The busbar assembly covers the plurality of cells 10 disposed in parallel, and each of a plurality of busbars 2 of the busbar assembly is connected to at least one of a corresponding positive terminal Z1 and/or negative terminal Z2.

Each cell 10 may include a shell 101, a steel ball, and a glue dispensing protrusion 102. The positive terminal Z1, the negative terminal Z2, and a liquid injection hole are provided on the shell 101. The steel ball is disposed at the liquid injection hole. The glue dispensing protrusion 102 seals a gap between the steel ball and the liquid injection hole.

In addition, an explosion-proof valve 103 and/or a two-dimensional code 104 may be further disposed on the shell 101. The explosion-proof valve 103 is configured to release pressure in the shell 101 when the pressure in the shell 101 is greater than a pressure threshold. The two-dimensional code 104 is used to store identity information of the cell 10, and two-dimensional codes 104 on different cells 10 store different identity information, that is, the two-dimensional code 104 may be used to identify the identity information of the cell 10.

In addition, embodiments of this application further provide a battery pack. The battery pack includes at least one battery module mentioned above. In addition, when the battery pack includes at least two battery modules mentioned above, the at least two battery modules may be connected in series.

In conclusion, for a problem of poor welding of the busbars caused because the plastic support is lifted by the glue dispensing protrusions, embodiments of this application provide a module design solution for performing, on cells, sealing performed through steel ball hitting and glue dispensing, which may be applied to all glue dispensing sealed cell group designs, so as to completely avoid a risk of poor welding of busbars of a battery module caused by glue dispensing hard protrusions of liquid injection holes of a lithium-ion battery. Specifically, when the battery module is formed by performing, on the cells, sealing performed through steel ball hitting and glue dispensing, hole bodies such as circular holes are designed in advance at a position corresponding to the glue dispensing protrusions of the plastic support, so as to reserve sufficient space for the glue dispensing protrusions, so that the glue dispensing protrusions are prevented from lifting the support, thereby avoiding a problem of poor welding of the busbars, and ensuring quality and safety of a design of performing, on a cell group, sealing performed through steel ball hitting and glue dispensing.

It should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments.

## Claims

1. A busbar assembly, comprising:
a support (1), wherein a plurality of hollow-out structures (11) are disposed on the support (1), and each hollow-out structure (11) is configured to correspond to a terminal of at least one cell of a battery module; and
a plurality of busbars (2), respectively mounted at the plurality of hollow-out structures (11), wherein each busbar is configured to connect to the terminal of the at least one cell; and
a plurality of hole bodies (12) are further provided on the support (1), and at least a part of the plurality of hole bodies (12) are configured to respectively correspond to a glue dispensing protrusion that is at a liquid injection hole of the at least one cell of the battery module, wherein
two hole bodies (12) corresponding to each cell are provided on the support (1), wherein a first end of the cell faces one side of the support (1), a second end of the cell faces the other side of the support (1), and one of the two hole bodies (12) corresponds to the glue dispensing protrusion; or the first end of the cell faces the other side of the support (1), the second end of the cell faces the side of the support (1), and the other one of the two hole bodies (12) corresponds to the glue dispensing protrusion.

2. The busbar assembly according to claim 1, wherein the hole body (12) is a circle or polygon.

3. The busbar assembly according to claim 1 or 2, wherein the hollow-out structure (11) comprises an opening (111) and a support platform (112), the busbar is supported and placed at the opening (111) on the support platform (112), and the support platform (112) comprises:
at least one boss (T1), disposed in a circumferential direction of the opening (111); and/or
a support rod (T2), wherein two ends of the support rod (T2) are respectively connected to two opposite sides of the opening (111).

4. The busbar assembly according to claim 3, wherein the support (1) comprises a plurality of first recess portions (A1), the hollow-out structure (11) is disposed at the first recess portion (A1), at least one first limiting clip (K1) is disposed at the first recess portion (A1), a gap is provided between the first limiting clip (K1) and the support platform (112) in a direction perpendicular to a plane on which the support (1) is located, the busbar (2) is disposed at the gap, and the first limiting clip (K1) is configured to clamp and fasten the busbar (2).

5. The busbar assembly according to any one of claims 1 to 4, wherein the plurality of busbars (2) comprise:
a plurality of first busbars (2a), wherein each first busbar (2a) is configured to connect terminals, of different polarities, of two cells that are adjacent in a first direction, so that the two cells that are adjacent in the first direction are connected in series; and
two second busbars (2b), wherein one of the two second busbars (2b) is configured to connect positive terminals of the plurality of cells connected in series, and the other is configured to connect negative terminals of the plurality of cells connected in series.

6. The busbar assembly according to claim 5, wherein the plurality of busbars (2) further comprise:
a third busbar (2c), configured to connect terminals, of different polarities, of two cells that are adjacent in a second direction, so that the two cells that are adjacent in the second direction are connected in series, wherein the first direction is perpendicular to the second direction.

7. The busbar assembly according to claim 1 to 6, wherein at least one via (G) is provided on the busbar (2), and the busbar (2) is welded to a positive terminal or a negative terminal of the cell at the at least one via (G).

8. The busbar assembly according to any one of claims 1 to 7, wherein the support (1) further comprises:
a plurality of second recess portions (A2), wherein the plurality of hole bodies (12) are provided at the plurality of second recess portions (A2), and at least one hole body (12) is provided at each second recess portion (A2); and/or
a plurality of third recess portions (A3), wherein each third recess portion (A3) is configured to mount a cable, a second limiting clip (K2) is disposed on at least a part of the third recess portion (A3), and the second limiting clip (K2) is used to clamp and fasten the cable.

9. A battery module, comprising:
a plurality of cells (10) disposed in parallel, wherein each cell (10) comprises a shell (101), a steel ball, and a glue dispensing protrusion (102), a positive terminal (Z1), a negative terminal (Z2), and a liquid injection hole are provided on the shell (101), the steel ball is disposed at the liquid injection hole, and the glue dispensing protrusion (102) seals a gap between the steel ball and the liquid injection hole; and
the busbar assembly according to any one of claims 1 to 8, covering the plurality of cells (10) disposed in parallel, wherein each of a plurality of busbars (2) of the busbar assembly is connected to at least one of the corresponding positive terminal (Z1) and/or negative terminal (Z2).

10. The battery module according to claim 9, wherein
the hole body (12) is a circle or polygon; and/or
two hole bodies (12) corresponding to each cell are provided on the support (1), wherein a first end of the cell faces one side of the support (1), a second end of the cell faces the other side of the support (1), and one of the two hole bodies (12) corresponds to the glue dispensing protrusion; or the first end of the cell faces the other side of the support (1), the second end of the cell faces the side of the support (1), and the other one of the two hole bodies (12) corresponds to the glue dispensing protrusion.

11. The battery module according to claim 9 or 10, wherein the hollow-out structure (11) comprises an opening (111) and a support platform (112), the busbar is supported and placed at the opening (111) on the support platform (112), and the support platform (112) comprises:
at least one boss (T1), disposed in a circumferential direction of the opening (111); and/or
a support rod (T2), wherein two ends of the support rod (T2) are respectively connected to two opposite sides of the opening (111).

12. The battery module according to claim 11, wherein the support (1) comprises a plurality of first recess portions (A1), the hollow-out structure (11) is disposed at the first recess portion (A1), at least one first limiting clip (K1) is disposed at the first recess portion (A1), a gap is provided between the first limiting clip (K1) and the support platform (112) in a direction perpendicular to a plane on which the support (1) is located, the busbar (2) is disposed at the gap, and the first limiting clip (K1) is configured to clamp and fasten the busbar (2).

13. The battery module according to any one of claims 9 to 12, wherein the plurality of busbars (2) comprise:
a plurality of first busbars (2a), wherein each first busbar (2a) is configured to connect terminals, of different polarities, of two cells that are adjacent in a first direction, so that the two cells that are adjacent in the first direction are connected in series; and
two second busbars (2b), wherein one of the two second busbars (2b) is configured to connect positive terminals of the plurality of cells connected in series , and the other is configured to connect negative terminals of the plurality of cells connected in series.

14. The battery module according to claim 13, wherein the plurality of busbars (2) further comprise:
a third busbar (2c), configured to connect terminals, of different polarities, of two cells that are adjacent in a second direction, so that the two cells that are adjacent in the second direction are connected in series, wherein the first direction is perpendicular to the second direction.

15. A battery pack, comprising at least one battery module according to claim 9.

## Patentansprüche

1. Sammelschienenanordnung, umfassend:
eine Halterung (1), wobei eine Vielzahl von hohlen Strukturen (11) auf der Halterung (1) angeordnet ist und jede hohle Struktur (11) dazu konfiguriert ist, einem Anschluss von mindestens einer Zelle eines Batteriemoduls zu entsprechen; und
eine Vielzahl von Sammelschienen (2), die jeweils an der Vielzahl von hohlen Strukturen (11) montiert sind, wobei jede Sammelschiene dazu konfiguriert ist, mit dem Anschluss der mindestens einen Zelle verbunden zu werden; und
eine Vielzahl von Lochkörpern (12), die ferner auf der Halterung (1) bereitgestellt sind, wobei zumindest ein Teil der Vielzahl von Lochkörpern (12) dazu konfiguriert ist, jeweils einem Klebstoffabgabevorsprung, der sich an einem Flüssigkeitseinspritzloch der mindestens einen Zelle des Batteriemoduls befindet, zu entsprechen, wobei
zwei Lochkörper (12), die jeder Zelle entsprechen, auf der Halterung (1) bereitgestellt sind, wobei ein erstes Ende der Zelle einer Seite der Halterung (1) zugewandt ist, ein zweites Ende der Zelle der anderen Seite der Halterung (1) zugewandt ist und einer der zwei Lochkörper (12) dem Klebstoffabgabevorsprung entspricht; oder das erste Ende der Zelle der anderen Seite der Halterung (1) zugewandt ist, das zweite Ende der Zelle der Seite der Halterung (1) zugewandt ist und der andere der zwei Lochkörper (12) dem Klebstoffabgabevorsprung entspricht.

2. Sammelschienenanordnung nach Anspruch 1, wobei der Lochkörper (12) ein Kreis oder ein Polygon ist.

3. Sammelschienenanordnung nach Anspruch 1 oder 2, wobei die hohle Struktur (11) eine Öffnung (111) und eine Halterungsplattform (112) umfasst, die Sammelschiene an der Öffnung (111) auf der Halterungsplattform (112) gehalten und platziert ist und die Halterungsplattform (112) Folgendes umfasst:
mindestens einen Höcker (T1), der in einer Umfangsrichtung der Öffnung (111) angeordnet ist; und/oder
eine Halterungsstange (T2), wobei zwei Enden der Halterungsstange (T2) jeweils mit zwei gegenüberliegenden Seiten der Öffnung (111) verbunden sind.

4. Sammelschienenanordnung nach Anspruch 3, wobei die Halterung (1) eine Vielzahl von ersten Rücksprungabschnitten (A1) umfasst, die hohle Struktur (11) auf dem ersten Rücksprungabschnitt (A1) angeordnet ist, mindestens eine erste Begrenzungsklammer (K1) auf dem ersten Rücksprungabschnitt (A1) angeordnet ist, ein Spalt zwischen der ersten Begrenzungsklammer (K1) und der Halterungsplattform (112) in einer Richtung senkrecht zu einer Ebene, auf der die Halterung (1) sich befindet, bereitgestellt ist, die Sammelschiene (2) bei dem Spalt angeordnet ist und die erste Begrenzungsklammer (K1) dazu konfiguriert ist, die Sammelschiene (2) zu klemmen und zu befestigen.

5. Sammelschienenanordnung nach einem der Ansprüche 1 bis 4, wobei die Vielzahl von Sammelschienen (2) Folgendes umfasst:
eine Vielzahl von ersten Sammelschienen (2a), wobei jede erste Sammelschiene (2a) dazu konfiguriert ist, Anschlüsse unterschiedlicher Polaritäten von zwei Zellen, die in einer ersten Richtung benachbart sind, derart zu verbinden, dass die zwei Zellen, die in der ersten Richtung benachbart sind, in Reihe geschaltet sind; und
zwei zweite Sammelschienen (2b), wobei eine der zwei zweiten Sammelschienen (2b) dazu konfiguriert ist, positive Anschlüsse der Vielzahl von in Reihe geschalteten Zellen zu verbinden, und die andere dazu konfiguriert ist, negative Anschlüsse der Vielzahl von in Reihe geschalteten Zellen zu verbinden.

6. Sammelschienenanordnung nach Anspruch 5, wobei die Vielzahl von Sammelschienen (2) ferner Folgendes umfasst:
eine dritte Sammelschiene (2c), die dazu konfiguriert ist, Anschlüsse unterschiedlicher Polaritäten von zwei Zellen, die in einer zweiten Richtung benachbart sind, derart zu verbinden, dass die zwei Zellen, die in der zweiten Richtung benachbart sind, in Reihe geschaltet sind, wobei die erste Richtung senkrecht zu der zweiten Richtung ist.

7. Sammelschienenanordnung nach Anspruch 1 bis 6, wobei mindestens eine Durchkontaktierung (G) auf der Sammelschiene (2) bereitgestellt ist und die Sammelschiene (2) an einen positiven Anschluss oder einen negativen Anschluss der Zelle an der mindestens einen Durchkontaktierung (G) geschweißt ist.

8. Sammelschienenanordnung nach einem der Ansprüche 1 bis 7, wobei die Halterung (1) ferner Folgendes umfasst:
eine Vielzahl von zweiten Rücksprungabschnitten (A2), wobei die Vielzahl von Lochkörpern (12) auf der Vielzahl von zweiten Rücksprungabschnitten (A2) bereitgestellt ist und mindestens ein Lochkörper (12) auf jedem zweiten Rücksprungabschnitt (A2) bereitgestellt ist; und/oder
eine Vielzahl von dritten Rücksprungabschnitten (A3), wobei jeder dritte Rücksprungabschnitt (A3) dazu konfiguriert ist, ein Kabel anzubringen, eine zweite Begrenzungsklammer (K2) auf mindestens einem Teil des dritten Rücksprungabschnitts (A3) angeordnet ist und die zweite Begrenzungsklammer (K2) dazu verwendet wird, das Kabel zu klemmen und zu befestigen.

9. Batteriemodul, umfassend:
eine Vielzahl von parallel angeordneten Zellen (10), wobei jede Zelle (10) ein Gehäuse (101), eine Stahlkugel und einen Klebstoffabgabevorsprung (102) umfasst, ein positiver Anschluss (Z1), ein negativer Anschluss (Z2) und ein Flüssigkeitseinspritzloch an dem Gehäuse (101) bereitgestellt sind, die Stahlkugel an dem Flüssigkeitseinspritzloch angeordnet ist und der Klebstoffabgabevorsprung (102) einen Spalt zwischen der Stahlkugel und dem Flüssigkeitseinspritzloch abdichtet; und
die Sammelschienenanordnung nach einem der Ansprüche 1 bis 8, welche die Vielzahl parallel angeordneter Zellen (10) abdeckt, wobei jede einer Vielzahl von Sammelschienen (2) der Sammelschienenanordnung mit mindestens einem der entsprechenden positiven Anschlüsse (Z1) und/oder negativen Anschlüsse (Z2) verbunden ist.

10. Batteriemodul nach Anspruch 9, wobei
der Lochkörper (12) ein Kreis oder ein Polygon ist; und/oder
zwei Lochkörper (12), die jeder Zelle entsprechen, auf der Halterung (1) bereitgestellt sind, wobei ein erstes Ende der Zelle einer Seite der Halterung (1) zugewandt ist, ein zweites Ende der Zelle der anderen Seite der Halterung (1) zugewandt ist und einer der zwei Lochkörper (12) dem Klebstoffabgabevorsprung entspricht; oder das erste Ende der Zelle der anderen Seite der Halterung (1) zugewandt ist, das zweite Ende der Zelle der Seite der Halterung (1) zugewandt ist und der andere der zwei Lochkörper (12) dem Klebstoffabgabevorsprung entspricht.

11. Batteriemodul nach Anspruch 9 oder 10, wobei die hohle Struktur (11) eine Öffnung (111) und eine Halterungsplattform (112) umfasst, die Sammelschiene an der Öffnung (111) auf der Halterungsplattform (112) gehalten und platziert ist und die Halterungsplattform (112) Folgendes umfasst:
mindestens einen Höcker (T1), der in einer Umfangsrichtung der Öffnung (111) angeordnet ist; und/oder
eine Halterungsstange (T2), wobei zwei Enden der Halterungsstange (T2) jeweils mit zwei gegenüberliegenden Seiten der Öffnung (111) verbunden sind.

12. Batteriemodul nach Anspruch 11, wobei die Halterung (1) eine Vielzahl von ersten Rücksprungabschnitten (A1) umfasst, die hohle Struktur (11) auf dem ersten Rücksprungabschnitt (A1) angeordnet ist, mindestens eine erste Begrenzungsklammer (K1) auf dem ersten Rücksprungabschnitt (A1) angeordnet ist, ein Spalt zwischen der ersten Begrenzungsklammer (K1) und der Halterungsplattform (112) in einer Richtung senkrecht zu einer Ebene, auf der die Halterung (1) sich befindet, bereitgestellt ist, die Sammelschiene (2) bei dem Spalt angeordnet ist und die erste Begrenzungsklammer (K1) dazu konfiguriert ist, die Sammelschiene (2) zu klemmen und zu befestigen.

13. Batteriemodul nach einem der Ansprüche 9 bis 12, wobei die Vielzahl von Sammelschienen (2) Folgendes umfasst:
eine Vielzahl von ersten Sammelschienen (2a), wobei jede erste Sammelschiene (2a) dazu konfiguriert ist, Anschlüsse unterschiedlicher Polaritäten von zwei Zellen, die in einer ersten Richtung benachbart sind, derart zu verbinden, dass die zwei Zellen, die in der ersten Richtung benachbart sind, in Reihe geschaltet sind; und
zwei zweite Sammelschienen (2b), wobei eine der zwei zweiten Sammelschienen (2b) dazu konfiguriert ist, positive Anschlüsse der Vielzahl von in Reihe geschalteten Zellen zu verbinden, und die andere dazu konfiguriert ist, negative Anschlüsse der Vielzahl von in Reihe geschalteten Zellen zu verbinden.

14. Batteriemodul nach Anspruch 13, wobei die Vielzahl von Sammelschienen (2) ferner Folgendes umfasst:
eine dritte Sammelschiene (2c), die dazu konfiguriert ist, Anschlüsse unterschiedlicher Polaritäten von zwei Zellen, die in einer zweiten Richtung benachbart sind, derart zu verbinden, dass die zwei Zellen, die in der zweiten Richtung benachbart sind, in Reihe geschaltet sind, wobei die erste Richtung senkrecht zu der zweiten Richtung ist.

15. Batteriepack, umfassend mindestens ein Batteriemodul nach Anspruch 9.

## Revendications

1. Ensemble barre omnibus, comprenant :
un support (1), dans lequel une pluralité de structures creuses (11) sont disposées sur le support (1), et chaque structure creuse (11) est configurée pour correspondre à une borne d'au moins une cellule d'un module de batterie ; et
une pluralité de barres omnibus (2), respectivement montées au niveau de la pluralité de structures creuses (11), dans lequel chaque barre omnibus est configurée pour se connecter à la borne de l'au moins une cellule ; et
une pluralité de corps de trou (12) sont également prévus sur le support (1), et au moins une partie de la pluralité de corps de trou (12) sont configurés pour correspondre respectivement à une saillie de distribution de colle qui se trouve au niveau d'un trou d'injection de liquide de l'au moins une cellule du module de batterie, dans lequel
deux corps de trou (12) correspondant à chaque cellule sont prévus sur le support (1), dans lequel une première extrémité de la cellule fait face à un côté du support (1), une seconde extrémité de la cellule fait face à l'autre côté du support (1), et l'un des deux corps de trou (12) correspond à la saillie de distribution de colle ; ou la première extrémité de la cellule fait face à l'autre côté du support (1), la seconde extrémité de la cellule fait face au côté du support (1), et l'autre des deux corps de trou (12) correspond à la saillie de distribution de colle.

2. Ensemble barre omnibus selon la revendication 1, dans lequel le corps de trou (12) est un cercle ou un polygone.

3. Ensemble barre omnibus selon la revendication 1 ou 2, dans lequel la structure creuse (11) comprend une ouverture (111) et une plateforme de support (112), la barre omnibus est supportée et placée au niveau de l'ouverture (111) sur la plateforme de support (112), et la plateforme de support (112) comprend :
au moins un bossage (T1), disposé dans une direction circonférentielle de l'ouverture (111) ; et/ou
une tige de support (T2), dans lequel deux extrémités de la tige de support (T2) sont respectivement reliées à deux côtés opposés de l'ouverture (111).

4. Ensemble barre omnibus selon la revendication 3, dans lequel le support (1) comprend une pluralité de premières parties d'évidemment (A1), la structure creuse (11) est disposée au niveau de la première partie d'évidemment (A1), au moins une première attache de limitation (K1) est disposée au niveau de la première partie d'évidemment (A1), un espace est prévu entre la première attache de limitation (K1) et la plateforme de support (112) dans une direction perpendiculaire à un plan sur lequel le support (1) est situé, la barre omnibus (2) est disposée au niveau de l'espace, et la première attache de limitation (K1) est configurée pour serrer et fixer la barre omnibus (2).

5. Ensemble barres omnibus selon l'une quelconque des revendications 1 à 4, dans lequel la pluralité de barres omnibus (2) comprend :
une pluralité de premières barres omnibus (2a), dans lequel chaque première barre omnibus (2a) est configurée pour connecter des bornes, de polarités différentes, de deux cellules qui sont adjacentes dans une première direction, de sorte que les deux cellules qui sont adjacentes dans la première direction soient connectées en série ; et
deux deuxièmes barres omnibus (2b), dans lequel l'une des deux deuxièmes barres omnibus (2b) est configurée pour connecter les bornes positives de la pluralité de cellules connectées en série, et l'autre est configurée pour connecter les bornes négatives de la pluralité de cellules connectées en série.

6. Ensemble barre omnibus selon la revendication 5, dans lequel la pluralité de barres omnibus (2) comprend également :
une troisième barre omnibus (2c), configurée pour connecter des bornes, de polarités différentes, de deux cellules qui sont adjacentes dans une seconde direction, de sorte que les deux cellules qui sont adjacentes dans la seconde direction soient connectées en série, dans lequel la première direction est perpendiculaire à la seconde direction.

7. Ensemble barre omnibus selon la revendication 1 à 6, dans lequel au moins un trou traversant (G) est prévu sur la barre omnibus (2), et la barre omnibus (2) est soudée à une borne positive ou à une borne négative de la cellule au niveau de l'au moins un trou traversant (G).

8. Ensemble barre omnibus selon l'une quelconque des revendications 1 à 7, dans lequel le support (1) comprend également :
une pluralité de deuxièmes parties d'évidemment (A2), dans lequel la pluralité de corps de trou (12) sont prévus au niveau de la pluralité de deuxièmes parties d'évidemment (A2), et au moins un corps de trou (12) est prévu au niveau de chaque deuxième partie d'évidemment (A2) ; et/ou
une pluralité de troisièmes parties d'évidemment (A3), dans lequel chaque troisième partie d'évidemment (A3) est configurée pour monter un câble, une seconde attache de limitation (K2) est disposée sur au moins une partie de la troisième partie d'évidemment (A3), et la seconde attache de limitation (K2) est utilisée pour serrer et fixer le câble.

9. Module de batterie, comprenant :
une pluralité de cellules (10) disposées en parallèle, dans lequel chaque cellule (10) comprend une enveloppe (101), une bille d'acier et une saillie de distribution de colle (102), une borne positive (Z1), une borne négative (Z2) et un trou d'injection de liquide sont prévus sur l'enveloppe (101), la bille d'acier est disposée au niveau du trou d'injection de liquide et la saillie de distribution de colle (102) scelle un espace entre la bille d'acier et le trou d'injection de liquide ; et
l'ensemble barre omnibus selon l'une quelconque des revendications 1 à 8, couvrant la pluralité de cellules (10) disposées en parallèle, dans lequel chacune d'une pluralité de barres omnibus (2) de l'ensemble barre omnibus est connectée à au moins l'une de la borne positive (Z1) et/ou de la borne négative (Z2) correspondantes.

10. Module de batterie selon la revendication 9, dans lequel
le corps de trou (12) est un cercle ou un polygone ; et/ou
deux corps de trou (12) correspondant à chaque cellule sont prévus sur le support (1), dans lequel une première extrémité de la cellule fait face à un côté du support (1), une seconde extrémité de la cellule fait face à l'autre côté du support (1), et l'un des deux corps de trou (12) correspond à la saillie de distribution de colle ; ou la première extrémité de la cellule fait face à l'autre côté du support (1), la seconde extrémité de la cellule fait face au côté du support (1), et l'autre des deux corps de trou (12) correspond à la saillie de distribution de colle.

11. Module de batterie selon la revendication 9 ou 10, dans lequel la structure creuse (11) comprend une ouverture (111) et une plateforme de support (112), la barre omnibus est supportée et placée au niveau de l'ouverture (111) sur la plateforme de support (112), et la plateforme de support (112) comprend :
au moins un bossage (T1), disposé dans une direction circonférentielle de l'ouverture (111) ; et/ou
une tige de support (T2), dans lequel deux extrémités de la tige de support (T2) sont respectivement reliées à deux côtés opposés de l'ouverture (111).

12. Module de batterie selon la revendication 11, dans lequel le support (1) comprend une pluralité de premières parties d'évidemment (A1), la structure creuse (11) est disposée au niveau de la première partie d'évidemment (A1), au moins une première attache de limitation (K1) est disposée au niveau de la première partie d'évidemment (A1), un espace est prévu entre la première attache de limitation (K1) et la plateforme de support (112) dans une direction perpendiculaire à un plan sur lequel le support (1) est situé, la barre omnibus (2) est disposée au niveau de l'espace, et la première attache de limitation (K1) est configurée pour serrer et fixer la barre omnibus (2).

13. Module de batterie selon l'une quelconque des revendications 9 à 12, dans lequel la pluralité de barres omnibus (2) comprend :
une pluralité de premières barres omnibus (2a), dans lequel chaque première barre omnibus (2a) est configurée pour connecter des bornes, de polarités différentes, de deux cellules qui sont adjacentes dans une première direction, de sorte que les deux cellules qui sont adjacentes dans la première direction soient connectées en série ; et
deux deuxièmes barres omnibus (2b), dans lequel l'une des deux deuxièmes barres omnibus (2b) est configurée pour connecter les bornes positives de la pluralité de cellules connectées en série, et l'autre est configurée pour connecter les bornes négatives de la pluralité de cellules connectées en série.

14. Module de batterie selon la revendication 13, dans lequel la pluralité de barres omnibus (2) comprend également :
une troisième barre omnibus (2c), configurée pour connecter des bornes, de polarités différentes, de deux cellules qui sont adjacentes dans une seconde direction, de sorte que les deux cellules qui sont adjacentes dans la seconde direction soient connectées en série, dans lequel la première direction est perpendiculaire à la seconde direction.

15. Bloc-batterie, comprenant au moins un module de batterie selon la revendication 9.
